# EUROPÄISCHE PATENTSCHRIFT

(11) **EP 3 365 634 B1**
(45) Veröffentlichungstag und Bekanntmachung des Hinweises auf die Patenterteilung: **25.03.2020**
(21) Anmeldenummer: 16781126.4
(22) Anmeldetag: 13.10.2016
(51) Int. Cl.: G01D 5/20

(54) **DREHWINKELSENSOR**
ROTATION ANGLE SENSOR
CAPTEUR D'ANGLE DE ROTATION

(30) Priorität: 22.10.2015 DE 102015220650
(43) Veröffentlichungstag der Anmeldung: 29.08.2018
(73) Patentinhaber: Robert Bosch GmbH, 70442 Stuttgart (DE)
(72) Erfinder: HERRMANN, Ingo, 71292 Friolzheim (DE); BUCK, Thomas, 71732 Tamm (DE); UTERMOEHLEN, Fabian, 71229 Leonberg (DE); MERZ, Andreas, 71691 Freiberg Am Neckar (DE); OSHINUBI, Dayo, 71277 Rutesheim (DE); KRAYL, Oliver, 70839 Gerlingen (DE); LEIDICH, Stefan, 71277 Rutesheim (DE)
(86) Internationale Anmeldenummer: PCT/EP2016/074552
(87) Internationale Veröffentlichungsnummer: WO 2017/067840

(56) Entgegenhaltungen:
- EP-A2- 0 549 285
- EP-A2- 1 975 570
- WO-A1-2015/115054
- FR-A1- 2 725 036
- US-A1- 2013 057 263

## Beschreibung

### Gebiet der Erfindung

Die Erfindung betrifft einen Drehwinkelsensor, mit dem beispielsweise ein Drehwinkel zwischen einer Welle und einem weiteren Bauteil bestimmt werden kann.

### Stand der Technik

Um Drehwinkel zu messen, sind beispielsweise Drehwinkelsensoren bekannt, bei denen ein Magnet über einen entsprechenden Magnetfeldsensor gedreht wird. Die Messung des Magnetfeldvektors erlaubt dann einen Rückschluss auf den Drehwinkel. Derartige Sensoren reagieren auch auf externe Magnetfelder, die beispielsweise durch einen Stromfluss von benachbart angeordneten Stromkabeln verursacht werden und können sehr störempfindlich sein.

Ein weiterer Typ Drehwinkelsensor nutzt einen Wirbelstromeffekt aus. Dabei wird beispielsweise ein metallisches Target über Sensorspulen bewegt, die mit einer Wechselspannung versorgt werden und in dem Target einen Wirbelstrom induzieren. Dies führt zur Reduzierung der Induktivitäten der Sensorspulen und erlaubt, über eine Frequenzänderung auf den Drehwinkel zu schließen. Beispielsweise sind die Spulen Bestandteil eines Schwingkreises, dessen Resonanzfrequenz sich bei einer Veränderung der Induktivität verschiebt. Dieser Typ von Drehwinkelsensor kann jedoch eine hohe Querempfindlichkeit gegenüber Einbautoleranzen (vor allem ein Verkippen des Targets) aufweisen. Auch kann die erzeugte Frequenz durch externe elektromagnetische Felder gestört werden (Injection Locking), da üblicherweise mit Frequenzen im Bereich von einigen zehn MHz gearbeitet wird.

Aus den Druckschriften US 7 191 759 B2, US 7 276 897 B2, EP 0 909 955 B1, US 6 236 199 B1 und EP 0 182 085 B1 sind außerdem Drehwinkelsensoren auf Basis von gekoppelten Spulen bekannt. In diesen Druckschriften wird in einer einzigen Erregerspule ein elektromagnetisches Wechselfeld aufgebaut, das in mehrere Empfangsspulen koppelt und dort jeweils eine Spannung induziert. Für die Messung des Drehwinkels wird ein drehbar gelagertes, elektrisch leitfähiges Target verwendet, das in Abhängigkeit seiner Winkelposition die induktive Kopplung zwischen der Erregerspule und den Empfangsspulen beeinflusst.

Aus der Druckschrift EP 1 975 570 A2 ist ein Drehwinkelsensor bekannt, dessen Statorelement mehrere Spulen umfasst. Ein bezüglich des Statorelements drehbar gelagertes Rotorelement koppelt je nach Drehwinkel unterschiedlich stark mit diesen Spulen. Zur Bestimmung des Drehwinkels versorgt eine Auswerteeinheit die Spulen der Reihe nach mit Wechselstrom und ermittelt den Betrag der jeweils durch die Stromeinspeisung entstehenden Spannung in der bestromten Spule.

### Offenbarung der Erfindung

### Vorteile der Erfindung

Ausführungsformen der vorliegenden Erfindung können in vorteilhafter Weise ermöglichen, einen Drehwinkel zwischen einer Welle und einem weiteren Bauteil auf eine Art und Weise zu bestimmen, so dass Störungen von außen und/oder Bauteiltoleranzen nur wenig Einfluss auf eine Messung haben.

Die Erfindung betrifft einen Drehwinkelsensor, der insbesondere in einer Umgebung mit hohen elektromagnetischen Störfeldern eingesetzt werden kann. Beispielsweise kann der Drehwinkelsensor im Motorraum oder in der Nähe des Motorraums eines Fahrzeugs verwendet werden, beispielsweise zur Bestimmung einer Position einer Drosselklappe, einer Rotorposition eines BLDC-Motors, einer Position eines Fahrpedals oder einer Position einer Nockenwelle.

Gemäß einer Ausführungsform der Erfindung umfasst der Drehwinkelsensor ein Statorelement mit wenigstens drei Spulen, ein bezüglich des Statorelements drehbar gelagertes Rotorelement, das dazu ausgeführt ist, abhängig von einem Drehwinkel unterschiedlich stark mit jeder der wenigstens drei Spulen induktiv zu koppeln bzw. mit einem Induktionselement die drei Spulen unterschiedlich zu überdecken; und eine Auswerteeinheit zum Bestimmen des Drehwinkels zwischen dem Rotorelement und dem Statorelement. Das Statorelement, das auch die Auswerteeinheit (beispielsweise ein IC, also ein integrierter Schaltkreis, oder ein ASIC, also ein anwenderspezifischer integrierter Schaltkreis) tragen kann, kann beispielsweise gegenüber dem Ende einer Welle angeordnet sein, auf dem das Rotorelement befestigt ist. Das Rotorelement kann ein Target bzw. Induktionselement tragen, das mit der Welle mitbewegt wird, die Spulen überdeckt und dadurch die Induktivität der Spulen verändert.

Die Auswerteeinheit ist dabei dazu ausgeführt, die Spulen zyklisch der Reihe nach mit Wechselspannung zu versorgen, so dass jeweils ein erster Teil der Spulen mit Wechselspannung versorgt wird und ein verbleibender Teil durch die Auswerteeinheit unbestromt ist. In diesem Zusammenhang bedeutet "unbestromt", dass die betreffende Spule nicht direkt von der Auswerteeinheit mit Wechselspannung versorgt wird. Da alle Spulen des Drehwinkelsensors abhängig vom Drehwinkel unterschiedlich stark mit dem Rotor induktiv koppeln, ergibt sich auch eine vom Drehwinkel abhängige Kopplung zwischen den Spulen. Werden eine oder mehrere Spulen bestromt (mit Wechselspannung versorgt), erzeugt dies in den anderen, unbestromten Spulen über die induktive Kopplung eine induzierte Wechselspannung, die somit auch vom Drehwinkel abhängig ist. In einer, zwei oder mehr der bestromten Spulen wird ein elektromagnetisches Wechselfeld erzeugt, das, je nach Position des Rotorelements, in den anderen Spulen oder in der anderen Spule eine Spannung induziert, die einen Rückschluss auf den Drehwinkel erlaubt.

Weiter ist die Auswerteeinheit dazu ausgeführt, zyklisch der Reihe nach bei einer oder mehrerer unbestromter Spulen jeweils eine Phase und/oder einen Betrag einer induzierten Wechselspannung zu ermitteln und daraus den Drehwinkel zu bestimmen. Beispielsweise kann die Auswerteeinheit die induzierte Spannung in den nicht mit Wechselspannung versorgten Spulen messen. Die Wechselspannung kann beispielsweise eine Frequenz unter einem MHz sein, was ein Injection Locking vermeiden kann.

Eine mit Wechselspannung versorgte Spule kann als Sendespule, die unbestromten Spulen als Empfangsspulen aufgefasst werden. Bei dem Drehwinkelsensor werden nicht immer die gleichen Spulen mit Wechselspannung versorgt und die induzierten Wechselspannungen nicht immer bei den gleichen Spulen ermittelt, sondern die Spulen fungieren zyklisch der Reihe nach als Sende- oder Empfangsspule. Damit können innerhalb eines Zyklus (der die Größenordnung einer Millisekunde aufweist), gesonderte Messungen durchgeführt werden. Ist N die Anzahl der Spulen und M<N die Anzahl der bestromten Spulen, können pro Zyklus N*(N-M) unterschiedliche Messungen von Betrag und/oder Phase durchgeführt werden. Bei N=3 sind dies bei einer bestromten Spule (M=1) 6 Messungen und bei zwei bestromten Spulen (M=2) 3 Messungen. Dies kann die Drehwinkelbestimmung erheblich genauer machen, als wenn immer nur die gleichen Spulen bestromt werden würden. Gemäß einer Ausführungsform der Erfindung ist die Auswerteeinheit dazu ausgeführt, dass wenigstens zwei Spulen aus dem ersten Teil der Spulen gleichzeitig mit unterschiedlichen Wechselspannungen versorgt werden. Beispielsweise können Wechselspannungen, mit denen die Spulen aus dem ersten Teil der Spulen versorgt werden, unterschiedliche Frequenz, unterschiedliche Phase und/oder unterschiedlichen Betrag aufweisen.

Die Wechselspannungen können beispielsweise unterschiedliche Frequenzen aufweisen. In einer unbestromten Spule wird dann eine Wechselspannung induziert, die Komponenten beider Frequenzen aufweist, deren Stärke vom Drehwinkel abhängt. Durch eine Fourier-Analyse der induzierten Wechselspannung können diese Komponenten ermittelt und der Drehwinkel bestimmt werden.

Bei gleicher Frequenz können sich die Wechselspannungen in Betrag und/oder Phase unterscheiden. Wechselspannungen unterschiedlicher Phase induzieren in einer unbestromten Spule eine Wechselspannung, deren Betrag und Phasenverschiebung gegenüber den erzeugten Wechselspannungen abhängig vom Drehwinkel ist.

Es ist aber auch möglich, dass zwei oder mehr Spulen mit der gleichen Wechselspannung versorgt werden.

Gemäß einer Ausführungsform der Erfindung wird lediglich eine Spule mit Wechselspannung versorgt und wird bei den verbleibenden Spulen jeweils ein Betrag und/oder eine Phase einer induzierten Wechselspannung ermittelt. Wenn der Sensor insgesamt drei Spulen aufweist, können so zyklisch eine Spule bestromt werden und bei den zwei anderen Spulen die Spannung ermittelt bzw. gemessen werden.

Gemäß einer Ausführungsform der Erfindung wird bei lediglich einer Spule die induzierte Wechselspannung ermittelt und werden die verbleibenden Spulen mit Wechselspannung versorgt. Wenn der Sensor insgesamt drei Spulen aufweist, können so zyklisch zwei Spulen gleichzeitig bestromt werden und bei der dritten Spule die Spannung gemessen werden.

Gemäß einer Ausführungsform der Erfindung ist die Auswerteeinheit dazu ausgeführt, aus dem Betrag und/oder der Phase des oder der ermittelten Wechselströme oder aus dem Betrag und/oder der Phase der induzierten Wechselspannung einen axialen Abstand zwischen dem Statorelement und dem Rotorelement zu bestimmen. Neben dem aktuellen Drehwinkel kann auch der Abstand der beiden Bestandteile (beispielsweise durch eine Mittelung über die Zeit) bestimmt werden, um so systematische Fehler bei der Winkelbestimmung zu reduzieren.

Gemäß einer Ausführungsform der Erfindung sind die Spulen planare Spulen. Unter einer planaren Spule ist dabei eine Spule zu verstehen, deren Wicklungen bzw. Windungen alle im Wesentlichen in einer Ebene liegen. Eine planare Spule kann beispielsweise nur 1% der Höhe ihres Durchmessers aufweisen.

Gemäß einer Ausführungsform der Erfindung sind die Spulen auf und/oder in einer Leiterplatte angeordnet. Beispielsweise können die Wicklungen bzw. Windungen alle auf den beiden Seiten einer Leiterplatte aufgebracht sein. Bei einer Leiterplatte mit mehreren Ebenen können die Wicklungen bzw. Windungen auch innerhalb der Leiterplatte verlaufen. Die Leiterplatte kann auch Bauteile und/oder ein IC für die Auswerteeinheit tragen.

Gemäß einer Ausführungsform der Erfindung überdecken sich die Spulen gegenseitig in einer axialen Richtung zumindest teilweise. Die Spulen können im Statorelement im Wesentlichen in einer Ebene (beispielsweise auf oder innerhalb einer Leiterplatte) angeordnet sein, wobei sie in Umfangsrichtung gegenübereinander verschoben sind. Jeder der Spulen kann im Wesentlichen in einer Ebene orthogonal zu der axialen Richtung angeordnet sein. Dass sich zwei Spulen in axiale Richtung wenigstens teilweise überdecken, kann so verstanden werden, dass sich die beiden Spulen, wenn sie in der axialen Richtung betrachtet werden, zumindest teilweise überdecken. Dies kann auch so verstanden werden, dass die beiden Spulen bei Projektion in axiale Richtung auf eine Ebene orthogonal zur axialen Richtung sich zumindest teilweise überdecken.

Gemäß einer Ausführungsform der Erfindung weist jede der Spulen wenigstens zwei in Umfangsrichtung aufeinander abfolgende Windungen bzw. Segmente auf. Die Spulen können aus axialer Sicht (d.h. mit Blickrichtung in Richtung der Drehachse des Rotorelements) mehrere Schleifen aufweisen, die beispielsweise in Umfangsrichtung aufeinanderfolgend angeordnet sind. Eine Windung bzw. ein Segment kann dabei eine oder mehrere Leiterschleifen der Spule umfassen, die eine von der Spule umlaufene Fläche ganz umrunden. Die Windungen können in einer Ebene verlaufen, die im Wesentlichen orthogonal zur Drehachse des Rotorelements verläuft.

Gemäß einer Ausführungsform der Erfindung weist jede der Spulen wenigstens eine erste Windung und wenigstens eine zweite Windung auf, wobei die wenigstens eine erste Windung und die wenigstens eine zweite Windung gegenläufig orientiert sind. Wenn eine Spule mit einer Wechselspannung versorgt wird, erzeugt sie ein elektromagnetisches Wechselfeld, das bei den ersten Windungen (im Wesentlichen) in eine erste Richtung und bei den zweiten Windungen (im Wesentlichen) in eine zweite, entgegengesetzte Richtung orientiert ist. Die erste und zweite Richtung können im Wesentlichen parallel zur Drehachse des Rotorelements verlaufen.

Die von der Spule erzeugten Wechselfelder induzieren Ströme im Rotorelement (abhängig von der Stellung des Rotorelements), die wiederum Wechselfelder erzeugen, die mit der Spule bzw. deren Windungen wechselwirken und somit die Induktivität verändern.

Ein externes elektromagnetisches Feld, das auf die Spule wirkt und das im Wesentlichen homogen durch zwei entgegengesetzt orientierte Windungen verläuft, erzeugt Ströme in der Spule, die sich (bei gleich großer Induktivität der Windungen) im Wesentlichen aufheben. Auf diese Weise können externe Störfelder ausgeglichen werden.

Gemäß einer Ausführungsform der Erfindung sind erste Windungen und zweite Windungen einer Spule in Umfangsrichtung des Statorelements abwechselnd zueinander angeordnet. Auf diese Weise entsteht pro Spule eine Kette von Windungen, die aufeinander abfolgend gegenläufig orientiert sind.

Gemäß einer Ausführungsform der Erfindung ist die von den ersten Windungen umlaufene Fläche gleich einer von den zweiten Windungen umlaufene Fläche. Wenn jede der Windungen die gleiche Anzahl an Leiterschleifen aufweist, führt dies dazu, dass im Wesentlichen homogene Störfelder bereits von der Spule unterdrückt werden. Dabei ist möglich, dass eine oder mehrere Spulen unterschiedlich große Windungen aufweisen.

Gemäß einer Ausführungsform der Erfindung umlaufen Windungen einer Spule unterschiedlich große Flächen. Bei mehreren Windungen pro Spule ist es auch möglich, dass die Spulen unterschiedlich große Windungen aufweisen, so dass sich zwar die Spulen überdecken, die Windungen jedoch zueinander versetzt angeordnet sind.

Gemäß einer Ausführungsform der Erfindung sind Windungen der Spulen zueinander versetzt angeordnet. Dadurch überdeckt das Rotorelement bzw. ein darauf befindliches Induktionselement die sich zumindest teilweise überdeckenden Windungen verschiedener Spulen unterschiedlich stark, so dass sich unterschiedliche Induktivitäten der betreffenden Spulen ergeben.

Gemäß einer Ausführungsform der Erfindung sind die Spulen in lediglich einem Winkelbereich des Statorelements angeordnet. Beispielsweise können die Spulen um den Mittelpunkt der Drehachse des Rotorelement um a/N (N Zahl der Spulen, a = Sensierbereich des Sensors, <= 360°) zueinander versetzt angeordnet sein. Es ist auch möglich, dass sich die Spulen vollständig überdecken und lediglich ihre Windungen zueinander versetzt angeordnet sind.

Gemäß einer Ausführungsform der Erfindung umrundet jede der Spulen das Statorelement komplett. Alle Spulen können entweder entlang eines Kreissegmentbogens (< 360°) oder eines vollen Kreisbogens (= 360°) um das Statorelement angeordnet sein. Es ist zu verstehen, dass in diesem Fall eine Fläche, die von der Spule umlaufen wird, nicht die Achse bzw. das Zentrum des Statorelements überdecken muss. D.h., die Spule kann lediglich in einem Randbereich des Statorelements angeordnet sein. Beispielsweise können die Spulen entlang eines Kreisbogensegments (von etwa 120°) angeordnet sein, wobei sich auf dem komplementären Kreisbogensegment (beispielsweise die restlichen 240°) keine Spulen befinden.

Gemäß einer Ausführungsform der Erfindung weist das Rotorelement wenigstens ein Induktionselement bzw. Target auf, das in einem Winkelbereich des Rotorelements angeordnet ist. Mit anderem Worten umläuft das Induktionselement das Rotorelement nur teilweise. Genauso wie die Spulen kann das Induktionselement lediglich in einem Randbereich des Rotorelements vorgesehen sein. Das Induktionselement kann ein metallisches Target sein, das auf dem Rotorelement drehbar in axialer Richtung dem Statorelement gegenüberliegend angeordnet ist. Das Induktionselement kann aus Vollmaterial oder aus einem Leiter auf einer Leiterplatte hergestellt sein. Das Induktionselement kann auch durch Aussparungen in einem Vollmaterial wie beispielsweise Fräsungen oder als Stanzteil bereitgestellt werden.

Gemäß einer Ausführungsform der Erfindung überdeckt das Induktionselement in axialer Richtung im Wesentlichen lediglich eine Windung einer Spule. Das Induktionselement und die Windung der Spule können im Wesentlichen in einer Ebene orthogonal zu der axialen Richtung angeordnet sein. Dass sich das Induktionselement und die Windung in axiale Richtung wenigstens teilweise überdecken, kann so verstanden werden, dass sie sich, wenn sie in der axialen Richtung betrachtet werden, zumindest teilweise überdecken. Dies kann auch so verstanden werden, dass sie sich bei Projektion in axiale Richtung auf eine Ebene orthogonal zur axialen Richtung zumindest teilweise überdecken.

Auf diese Weise ändert das Induktionselement nur die Induktivität höchstens einer Windung und der Drehsensor erhält eine maximale Auflösung. Es ist auch möglich, dass das Rotorelement mehrere Induktionselemente umfasst, die beispielsweise im gleichen Abstand in Umfangsrichtung um die Drehachse angeordnet sind.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt schematisch einen Drehwinkelsensor gemäß einer Ausführungsform der Erfindung.
Fig. 2 zeigt schematisch einen Drehwinkelsensor gemäß einer weiteren Ausführungsform der Erfindung.
Fig. 3A, 3B und 3C zeigen schematisch Spulenlayouts für den Drehwinkelsensor aus der Fig. 2.
Fig. 4 zeigt ein Induktionselement für den Drehwinkelsensor aus der Fig. 2.
Fig. 5 zeigt schematisch einen Drehwinkelsensor gemäß einer weiteren Ausführungsform der Erfindung.
Fig. 6A, 6B und 6C zeigen schematisch Spulenlayouts für den Drehwinkelsensor aus der Fig. 5.
Fig. 7 zeigt Induktionselemente für den Drehwinkelsensor aus der Fig. 5.
Fig. 8A zeigt ein Bestromungsschema für einen Drehwinkelsensor gemäß einer Ausführungsform der Erfindung.
Fig. 8B zeigt ein Bestromungsschema für einen Drehwinkelsensor gemäß einer weiteren Ausführungsform der Erfindung.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

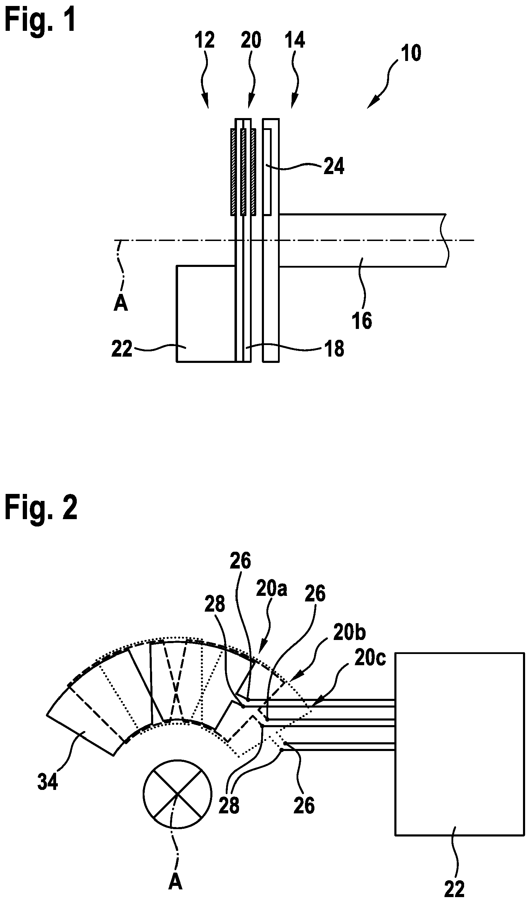

Fig. 1 zeigt einen Drehwinkelsensor 10 aus einem Statorelement 12 und einem Rotorelement 14. Das Rotorelement 14 kann auf einer Welle 16 eines Bauteils, wie etwa einer Drosselklappe, einem Motor, einer Nockenwelle, eines Fahrpedals usw., befestigt sein oder von dieser Welle 16 bereitgestellt werden. Die Welle 16 ist um die Achse A drehbar und das Statorelement 12 liegt dem Rotorelement 14 in der entsprechenden axialen Richtung gegenüber. Beispielsweise ist das Statorelement 12 an einem Gehäuse des Bauteils befestigt.

Das Statorelement 12 umfasst eine Leiterplatte 18, auf der eine Mehrzahl von Spulen 20 in der Ebene der Leiterplatte 18 angeordnet ist. Die Leiterplatte 18 kann eine mehrlagige Leiterplatte 18 sein und die Leiter der Spulen 20 können sich auf den beiden Seiten der Leiterplatte 18 und zwischen den einzelnen Lagen der Leiterplatte 18 befinden. Auf der Leiterplatte 18 können sich weitere Bauelemente für eine Auswerteeinheit 22 befinden. Die Auswerteeinheit 22 kann jede der Spulen 20 mit einer Wechselspannung versorgen und auch eine induzierte Wechselspannung in jeder der Spulen 20 ermitteln. Basierend auf diesen Messungen kann die Auswerteeinheit 22 einen relativen Drehwinkel zwischen dem Statorelement 12 und dem Rotorelement 14 bestimmen.

Das Rotorelement 14 umfasst ein oder mehrere Induktionselemente 24, die in axialer Richtung den Spulen 20 gegenüberliegen. Die Induktionselemente 24 können, wie in der Fig. 1 gezeigt, auf einer weiteren Leiterplatte angeordnet sein, die an der Welle 16 befestigt ist. Es ist auch möglich, dass das oder die Induktionselemente 24 durch Bearbeiten eines Endes der Welle 16 erzeugt werden.

Wenn die Auswerteeinheit 22 eine oder mehrere der Spulen 20 mit Wechselspannung versorgt, erzeugen diese ein Magnetfeld, das wiederum in dem Induktionselement 24, das aus einem elektrisch leitfähigen Material gefertigt ist, Wirbelströme induziert. Diese Wirbelströme erzeugen wiederum Magnetfelder, die mit den Spulen 20 wechselwirken und die Induktivität der Spulen 20 verändern. Basierend auf diesen veränderten Induktivitäten kann die Auswerteeinheit 22 den Drehwinkel bestimmen.

Die Fig. 2 zeigt einen Drehwinkelsensor, dessen Spulen (eine erste Spule 20a, eine zweite Spule 20b, eine dritte Spule 20c) lediglich einen Winkelbereich um die Achse A kleiner als 360° (hier etwa 120°) überdecken. Zur besseren Übersichtlichkeit überdeckt jede der Spulen nicht den kompletten Winkelbereich.

Die drei Spulen 20a, 20b, 20c sind an ersten Anschlüssen 26 und zweiten Anschlüssen 28 mit der Auswerteeinheit 22 verbunden und werden dort von der Auswerteeinheit 22 zyklisch mit einer Wechselspannung versorgt. Beispielsweise werden innerhalb eines Zyklus aus drei Schritten zuerst die erste Spule 20a, dann die zweite Spule 20b und dann die dritte Spule 20c mit einer Wechselspannung versorgt, wobei die anderen beiden Spulen unbestromt bleiben. Durch die vom Drehwinkel abhängige Stellung des Induktionselements 24 (hier nicht dargestellt) koppeln die drei Spulen 20a, 20b, 20c abhängig vom Drehwinkel unterschiedlich stark mit dem Induktionselement 24 und damit auch untereinander. Somit werden je nach Drehwinkel in den unbestromten Spulen Wechselspannungen induziert, deren Betrag und/oder Phase ermittelt werden kann. Beispielsweise kann in diesen Spulen ein Wechselstrom bzw. ein Betrag und/oder eine Phase dieses Wechselstroms gemessen werden, aus dem die Spannung bzw. deren Betrag und/oder Phase abgeleitet werden kann.

Innerhalb eines Zyklus werden somit für drei verschiedene Konfigurationen von einer bestromten und zwei unbestromten Spulen 20 jeweils zwei verschiedene Beträge und/oder Phasen ermittelt, aus denen die Auswerteeinheit 22 dann den aktuellen Drehwinkel berechnen kann.

Alternativ dazu kann die Auswerteeinheit 22 innerhalb eines Zyklus aus drei Schritten zuerst die erste Spule 20a und die zweite Spule 20b, dann die zweite Spule 20b und die dritte Spule 20c und dann die dritte Spule 20b und die erste Spule 20a mit zwei Wechselspannungen versorgen. In der verbleibenden Spule wird dann eine Wechselspannung induziert, aus deren Betrag und/oder Phase dann der Drehwinkel bestimmt werden kann.

Neben dem Drehwinkel kann auch der Abstand des Induktionselements 24 bzw. des Rotorelements 14 von dem Sensorelement 12 in axialer Richtung aus den ermittelten Phasen und/oder Beträgen der induzierten Wechselspannung(en) bestimmt werden, beispielsweise durch Mittelwertbildung über mehrere Zyklen.

Die Fig. 2 zeigt weiter, dass die drei Spulen 20a, 20b, 20c als planare Spulen mit mehreren in einer Ebene liegenden Windungen 34 ausgeführt sind. Die Spulen 20a, 20b, 20c sind in Umfangsrichtung zueinander versetzt auf dem Statorelement 12 angeordnet. Sie überdecken sich, entlang der der axialen Richtung betrachtet bzw. in Aufsicht, entlang der Umfangsrichtung zumindest teilweise.

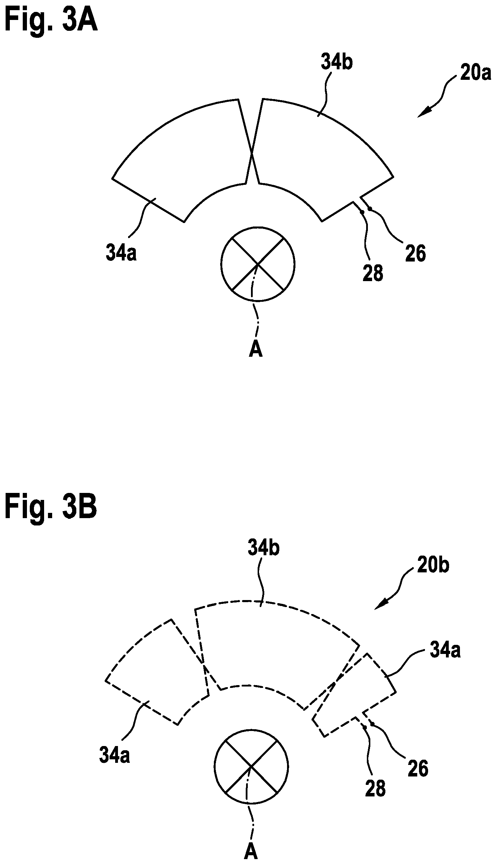

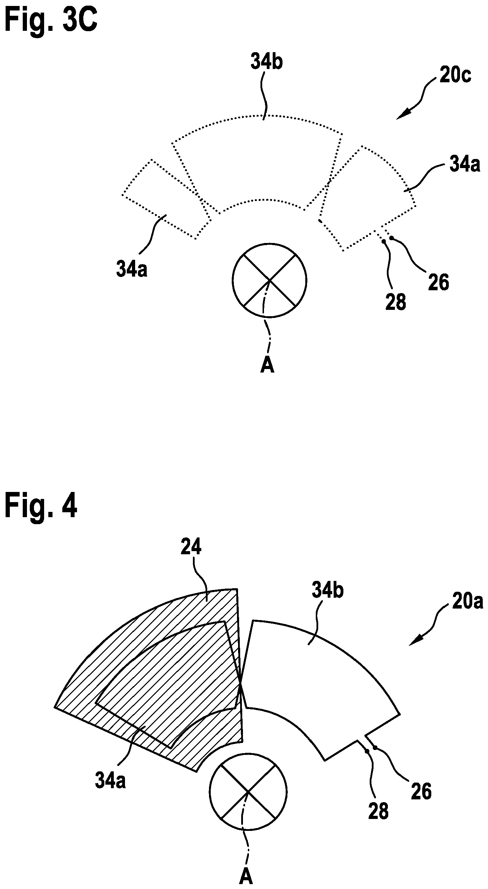

Die Fig. 3A, 3B und 3C zeigen schematisch mögliche Spulenlayouts für die drei Spulen 20a, 20b, 20c. Die Spule 20a aus der Fig. 3A umfasst je einmal eine erste Windung 34a und eine zweite Windung 34b. Beide Windungen 34a, 34b sind gleich groß bzw. umlaufen die gleiche Fläche. Die beiden Windungen sind entlang der Umfangrichtung gegeneinander versetzt.

Die Spulen 20b und 20c aus den Fig. 3B und 3C umfassen je zwei erste Windungen 34a und je eine zweite Windung 34b. Die zweite Windung 34b ist in Umfangsrichtung zwischen den ersten Windungen 34a angeordnet. Die ersten Windungen 34a sind unterschiedlich groß und/oder jeweils kleiner als die zweite Windung 34b. Die Summe der von den ersten Windungen 34a umschlossenen Flächen entspricht der von der zweiten Windung 34b umschlossenen Fläche.

Die in den Fig. 3A, 3B und 3C gezeigten Spulen 20a, 20b, 20c können in einem Drehwinkelsensor so verbaut werden, dass sie sich vollständig überdecken. Jede der Spulen 20a, 20b, 20 wird dabei mit einer Einzelwechselspannung V1, V2, V3 versorgt, so wie es in der Fig. 2 gezeigt ist. Auf diese Weise sind die Windungen 34a, 34b der Spulen 20b, 20c, die verschieden große Flächen umlaufen, gegenüber den Windungen 34a, 34b der Spule 20a versetzt, so dass sich eine Windung 34a, 34b einer Spule 20a, 20b, 20c jeweils immer nur teilweise mit einer Windung 34a, 34b einer anderen Spule überdeckt. Auf diese Weise kann eine maximale Winkelauflösung für den von den drei Spulen 20a, 20b, 20c überdeckten Winkelbereich erzielt werden.

Jede der Spulen 20a, 20b, 20c umfasst gegenläufige Windungen, die in erste Windungen 34a mit einer ersten Orientierung und in zweite Windungen 34b mit einer zweiten, gegenläufigen Orientierung unterteilt werden können. Die Windungen 34a, 34b jeder Spule sind in Umfangsrichtung um die Achse A aufeinander abfolgend angeordnet, so dass sich eine Kette von Windungen mit abwechselnder Orientierung ergibt.

Die ersten Windungen 34a und die zweiten Windungen 34b umlaufen jeweils die gleiche Fläche, so dass ein homogenes (Stör-)Magnetfeld durch jede der Spulen 20a, 20b, 20c zwar einen Strom in der jeweiligen Windung 34a, 34b erzeugt, wobei sich die einzelnen Ströme jedoch in einer Spule 20a, 20b, 20c gegenseitig aufheben.

Fig. 4 zeigt ein Induktionselement 24 und aus Gründen der Übersichtlichkeit lediglich eine Spule, die erste Spule 20a. Die folgenden Ausführungen können jedoch auch für die zweite Spule 20b und die dritte Spule 20c gelten. Wie die Fig. 4 zeigt, ist das Induktionselement 24 in etwa so groß wie eine Windung, d.h. überdeckt aus axialer Sicht betrachtet bzw. in einer Projektion entlang der axialen Richtung in etwa die gleiche Fläche entlang des Umfangs. Jede der Windungen 34a, 34b erzeugt ein Magnetfeld, das wiederum in dem Induktionselement 24 Wirbelströme erzeugt, die wiederum ein Magnetfeld erzeugen, die in der jeweiligen Windung Ströme erzeugen und so die Induktivität der jeweiligen Windung 34a, 34b und somit die Gesamtinduktivität der Spule 20a, 20b, 20c verändern. Abhängig von der Winkelstellung des Rotorelements 14 mit dem Induktionselement ändert sich somit die Induktivität der Spulen 20a, 20b, 20c. Da die ersten Windungen 34a und die zweiten Windungen 34b der verschiedenen Spulen 20a, 20b, 20c versetzt zueinander angeordnet sind, ändert das Induktionselement 24 die Induktivitäten jeder Spule 20a, 20b, 20c zusätzlich unterschiedlich, so dass sich eine gute Winkelauflösung des Drehwinkelsensors 10 ergibt.

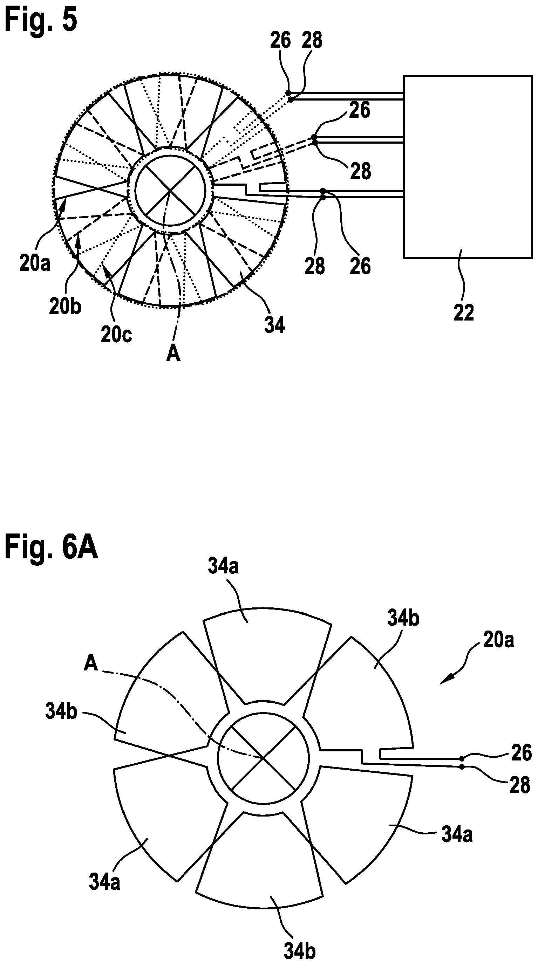

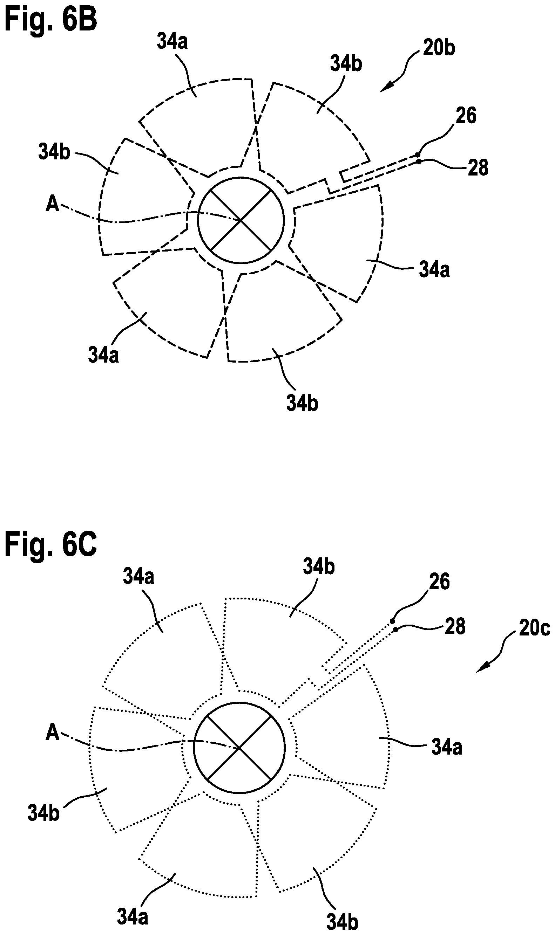

Die Fig. 5 bis 7 zeigen Darstellungen analog den Fig. 2 bis 4. Wenn nichts anderes beschrieben wird, gelten die Ausführungen zu den Fig. 2 bis 4 entsprechend.

In den Fig. 5 bis 7 ist ein Drehwinkelsensor 10 gezeigt, dessen erste Spule 20a, zweite Spule 20b und dritte Spule 20c das Sensorelement 12 vollständig umgeben. Die Spulen 20a, 20b, 20c sind identisch aufgebaut. Genauso wie bei der Fig. 2 sind die Spulen 20a, 20b, 20c auf dem Statorelement 12 zueinander versetzt angeordnet. Die jeweils 6 Windungen 34a, 34b der Spulen 20a, 20b, 20c umlaufen jeweils alle die gleiche Fläche, um äußere Störfelder zu kompensieren. Die Anzahl der Windungen ist nicht auf 6 beschränkt, sollte jedoch eine gerade Zahl sein, um Störfelder zu kompensieren. Aus der Anzahl der Windungen und dem Öffnungswinkel ergibt sich die Periodizität des Sensors.

In den Fig. 5 bis 7 ist ein Drehwinkelsensor 10 gezeigt, dessen erste Spule 20a, zweite Spule 20b und dritte Spule 20c das Sensorelement 12 vollständig umgeben. Die Spulen 20a, 20b, 20c sind identisch aufgebaut. Genauso wie bei der Fig. 2 sind die Spulen 20a, 20b, 20c auf dem Statorelement 12 zueinander versetzt angeordnet. Die jeweils 6 Windungen 34a, 34b der Spulen 20a, 20b, 20c umlaufen jeweils alle die gleiche Fläche, um äußere Störfelder zu kompensieren. Die Anzahl der Windungen ist nicht auf 6 beschränkt, sollte jedoch eine gerade Zahl sein, um Störfelder zu kompensieren. Aus der Anzahl der Windungen und dem Öffnungswinkel ergibt sich die Periodizität des Sensors.

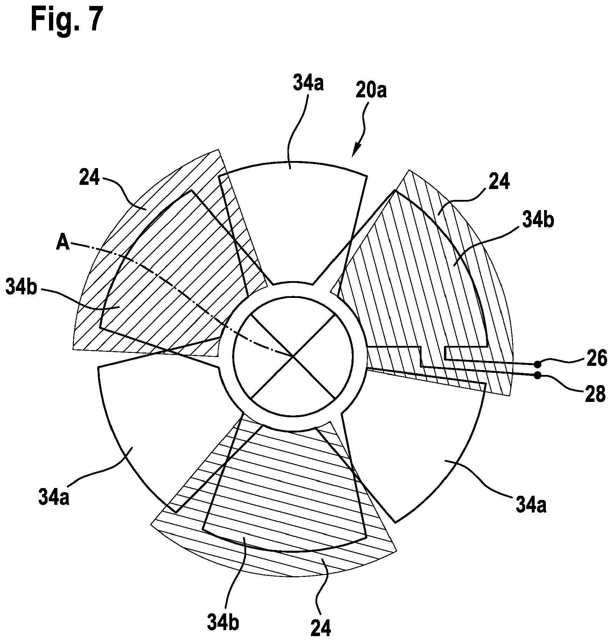

Die Fig. 7 zeigt, dass auf dem Rotorelement 14 auch drei Induktionselemente 24 angeordnet sein können. Durch die drei um 120° zueinander versetzten Induktionselemente 24, die jeweils in etwa eine Windung 34a, 34b überdecken, kann sich eine bessere Kompensation von Toleranzen bei einem Eindeutigkeitsbereich von 120° ergeben. Hierbei sind in der Figur exemplarisch lediglich die erste Spule 20 und das Induktionselement 24 dargestellt, um die Figur übersichtlicher zu gestalten und das Zusammenwirken von Induktionselement 24 und den Spulen 20a, 20b, 20c darzustellen. Die zweite Spule 20b und die dritte Spule 20c sind gegenüber der ersten Spule 20a verdreht angeordnet.

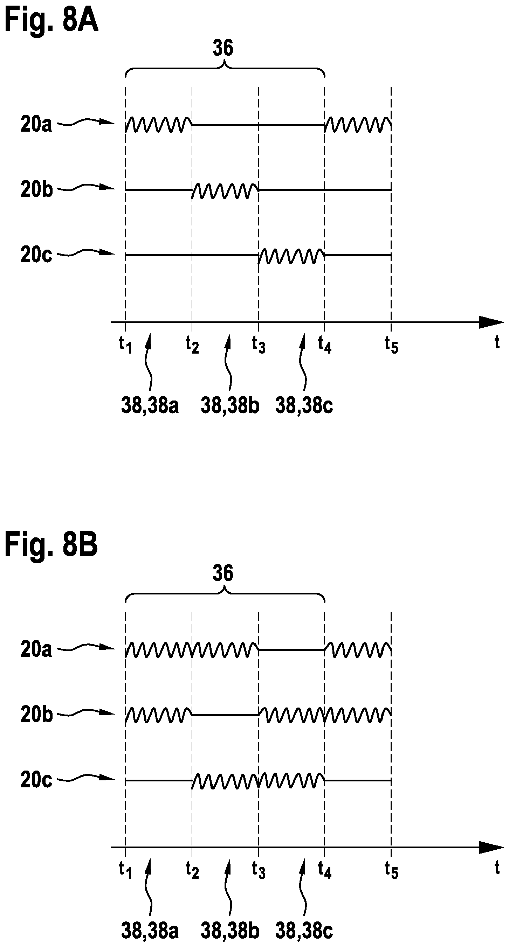

Die Fig. 8A zeigt ein Diagramm mit einem Bestromungszyklus 36 für die Spulen 20a, 20b, 20c des Drehwinkelsensors aus der Fig. 2 oder 5. Der Zyklus 36 besteht aus drei gleich langen Schritten 38 (in der Größenordnung von einer Millisekunde). Im Allgemeinen ist die Anzahl der Schritte 38 gleich der Anzahl der Spulen.

Während des ersten Schritts 38a wird die erste Spule 20a mit Wechselspannung versorgt, d.h. dient als Sende- bzw. Erregerspule. Die anderen beiden Spulen (zweite Spule 20b und dritte Spule 20c) werden nicht bestromt, sondern es wird die in ihnen erzeugte Wechselspannung ermittelt. D.h., die beiden anderen Spulen 20b, 20c dienen als Empfangsspulen.

In den folgenden Schritten werden die Rollen der Spulen zyklisch vertauscht: Im zweiten Schritt 38b dient die zweite Spule 20b als Sendespule und die erste Spule 20a sowie die dritte Spule 20c dienen als Empfangsspulen. Im dritten Schritt 38c dient die dritte Spule 20c als Sendespule und die erste Spule 20a sowie die zweite Spule 20b dienen als Empfangsspulen. Anschließend beginnt der nächste Zyklus wieder mit dem ersten Schritt 38, 38a.

Durch die Ausführung der Spulen 20a, 20b, 20c als Planarspulen mit gegenläufigen Windungen 34 werden beispielsweise bei Beaufschlagung der ersten Spule 20a mit einer Wechselspannung (ohne Induktionselement 24) in den Windungen 34 jeweils elektromagnetische Wechselfelder unterschiedlichen Vorzeichens erzeugt. Da die umschlossenen Flächen von rechtslaufenden und linkslaufenden Windungen 34 jeweils gleich groß sind, heben sich die Felder nach außen auf und in den anderen Spulen (d.h. hier der zweiten Spule 20b und der dritten Spule 20c) wird keine Spannung induziert: Wird nun durch das Induktionselement 24 ein Teil der Sendespulenfläche abgeschirmt, heben sich die Teilfelder nicht mehr auf und es wird eine Spannung in den anderen beiden Spulen (zweite Spule 20b, dritte Sule 20c) induziert. Durch das zyklische Vertauschen der Sende- und Empfangsspulen ist eine Rückrechnung auf den Drehwinkel möglich und eine Kompensation eines variierenden Abstandes zwischen Statorelement 12 und Rotorelement 14 in axialer Richtung, beispielsweise aufgrund mechanischer Toleranzen, möglich.

Die Fig. 8B zeigt ein Diagramm mit einem weiteren Bestromungszyklus 36 für die Spulen 20a, 20b, 20c des Drehwinkelsensors aus der Fig. 2 oder 5, bei dem pro Schritt 38 jeweils zwei Spulen bestromt werden.

Im ersten Schritt 38a dienen die erste Spule 20a und die zweite Spule 20b als Sendespulen und die dritte Spule 20c dient als Empfangsspule. Im zweiten Schritt 38b dienen die Spulen erste Spule 20a und die dritte Spule 20c als Sendespulen und die zweite Spule 20b dient als Empfangsspule. Im dritten Schritt 38c dienen die zweite Spule 20b und die dritte Spule 20c als Sendespulen und die erste Spule 20a dient als Empfangsspule.

Die jeweils bestromten Sendespulen können mit zwei unterschiedlichen Wechselspannungen mit unterschiedlichen Frequenzen versorgt werden, die in der Empfangsspule abhängig vom Drehwinkel eine Wechselspannung induzieren, die zwei Komponenten mit den beiden Frequenzen aufweist. Diese Komponenten können beispielsweise mit Fourier-Analyse voneinander abgetrennt und daraus der Betrag und/oder die Phase der Komponentenspannungen ermittelt werden.

Abschließend ist darauf hinzuweisen, dass Begriffe wie "aufweisend", "umfassend" etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Drehwinkelsensor (10), umfassend:
ein Statorelement (12) mit wenigstens drei Spulen (20);
ein bezüglich des Statorelements (12) drehbar gelagertes Rotorelement (14), das dazu ausgeführt ist, abhängig von einem Drehwinkel unterschiedlich stark mit jeder der wenigstens drei Spulen (20) induktiv zu koppeln;
eine Auswerteeinheit (22) zum Bestimmen des Drehwinkels zwischen dem Rotorelement (14) und dem Statorelement (12);
**dadurch gekennzeichnet, dass**
die Auswerteeinheit (22) dazu ausgeführt ist, die Spulen (20) zyklisch der Reihe nach mit Wechselspannung zu versorgen, so dass jeweils ein erster Teil der Spulen (20) mit Wechselspannung versorgt wird und ein verbleibender Teil durch die Auswerteeinheit unbestromt ist; und
die Auswerteeinheit dazu ausgeführt ist, zyklisch der Reihe nach bei einer oder mehrerer unbestromter Spulen (20) jeweils eine Phase und/oder einen Betrag einer induzierten Wechselspannung zu ermitteln und daraus den Drehwinkel zu bestimmen.

2. Drehwinkelsensor (10) nach Anspruch 1,
wobei wenigstens zwei Spulen (20) aus dem ersten Teil der Spulen gleichzeitig mit unterschiedlichen Wechselspannungen versorgt werden.

3. Drehwinkelsensor (10) nach Anspruch 1 oder 2,
wobei Wechselspannungen, mit denen die Spulen (20) aus dem ersten Teil der Spulen versorgt werden, unterschiedliche Frequenz, unterschiedliche Phase und/oder unterschiedlichen Betrag aufweisen.

4. Drehwinkelsensor (10) nach einem der vorhergehenden Ansprüche,
wobei lediglich eine Spule mit Wechselspannung versorgt wird und bei den verbleibenden Spulen (20) jeweils ein Betrag und/oder eine Phase einer induzierten Wechselspannung ermittelt wird; oder
wobei bei lediglich einer Spule (20) die induzierte Wechselspannung ermittelt wird und die verbleibenden Spulen mit Wechselspannung versorgt werden.

5. Drehwinkelsensor (10) nach einem der vorhergehenden Ansprüche,
wobei die Auswerteeinheit (22) dazu ausgeführt ist, aus dem Betrag und/oder der Phase der induzierten Wechselspannung einen axialen Abstand zwischen dem Statorelement (12) und dem Rotorelement (14) zu bestimmen.

6. Drehwinkelsensor (10) nach einem der vorhergehenden Ansprüche,
wobei die Spulen (20) planare Spulen sind; und/oder
wobei die Spulen (20) auf und/oder in einer Leiterplatte (18) angeordnet sind.

7. Drehwinkelsensor (10) nach einem der vorhergehenden Ansprüche,
wobei sich die Spulen (20) gegenseitig in einer axialen Richtung zumindest teilweise überdecken; und/oder
wobei jede der Spulen (20) wenigstens zwei in Umfangsrichtung aufeinander abfolgende Windungen (34) aufweist.

8. Drehwinkelsensor (10) nach einem der vorhergehenden Ansprüche,
wobei jede der Spulen (20) wenigstens eine erste Windung (34a) und wenigstens eine zweite Windung (34b) aufweist, wobei die wenigstens eine erste Windung (34a) und die wenigstens eine zweite Windung (34b) gegenläufig orientiert sind; und/oder
wobei erste Windungen (34a) und zweite Windungen (34b) einer Spule (20) in Umfangsrichtung des Statorelements (12) abwechselnd aufeinander angeordnet sind; und/oder
wobei die von den ersten Windungen (34a) umlaufene Fläche gleich einer von den zweiten Windungen (34b) umlaufene Fläche ist.

9. Drehwinkelsensor (10) nach einem der vorhergehenden Ansprüche,
wobei Windungen (34a, 34b) einer Spule (20) unterschiedlich große Flächen umlaufen; und/oder
wobei Windungen (34a, 34b) der Spulen (20) zueinander versetzt angeordnet sind.

10. Drehwinkelsensor (10) nach einem der vorhergehenden Ansprüche,
wobei die Spulen (20) in lediglich einem Winkelbereich des Statorelements (12) angeordnet sind; oder
wobei jede der Spulen (20) das Statorelement (14) komplett umrundet.

11. Drehwinkelsensor (10) nach einem der vorhergehenden Ansprüche,
wobei das Rotorelement (14) wenigstens ein Induktionselement (24) aufweist, das in einem Winkelbereich des Rotorelements angeordnet ist; und/oder
wobei das Induktionselement (24) in axialer Richtung lediglich eine Windung (34a, 34b) einer Spule (20) überdeckt.

## Claims

1. Rotation-angle sensor (10) comprising:
a stator element (12) with at least three coils (20);
a rotor element (14), rotatably mounted with respect to the stator element (12), which is designed to couple inductively with variable intensity, depending on an angle of rotation, with each of the at least three coils (20) ;
an evaluating unit (22) for determining the angle of rotation between the rotor element (14) and the stator element (12);
**characterized in that**
the evaluating unit (22) is designed to supply the coils (20) cyclically in succession with alternating voltage, so that in each instance a first portion of the coils (20) is supplied with alternating voltage, and a remaining portion is left currentless by the evaluating unit; and
the evaluating unit is designed to ascertain, cyclically in succession, in each instance a phase and/or a magnitude of an induced alternating voltage in one or more currentless coils (20), and to determine therefrom the angle of rotation.

2. Rotation-angle sensor (10) according to Claim 1, wherein at least two coils (20) from the first portion of the coils are simultaneously supplied with differing alternating voltages.

3. Rotation-angle sensor (10) according to Claim 1 or 2,
wherein alternating voltages, with which the coils (20) from the first portion of the coils are supplied, exhibit differing frequency, differing phase and/or differing magnitude.

4. Rotation-angle sensor (10) according to one of the preceding claims,
wherein only one coil is supplied with alternating voltage, and in the remaining coils (20) a magnitude and/or a phase of an induced alternating voltage is/are ascertained in each instance; or
wherein the induced alternating voltage is ascertained in only one coil (20), and the remaining coils are supplied with alternating voltage.

5. Rotation-angle sensor (10) according to one of the preceding claims,
wherein the evaluating unit (22) is designed to determine an axial spacing between the stator element (12) and the rotor element (14) from the magnitude and/or the phase of the induced alternating voltage.

6. Rotation-angle sensor (10) according to one of the preceding claims,
wherein the coils (20) are planar coils; and/or
wherein the coils (20) are arranged on and/or in a printed circuit board (18).

7. Rotation-angle sensor (10) according to one of the preceding claims,
wherein the coils (20) mutually overlap at least partially in an axial direction; and/or
wherein each of the coils (20) exhibits at least two turns (34) succeeding one another in the peripheral direction.

8. Rotation-angle sensor (10) according to one of the preceding claims,
wherein each of the coils (20) exhibits at least one first turn (34a) and at least one second turn (34b), the at least one first turn (34a) and the at least one second turn (34b) being oriented in counter-circulating manner; and/or
wherein first turns (34a) and second turns (34b) of a coil (20) are arranged alternately on one another in the peripheral direction of the stator element (12); and/or wherein the area circulated by the first turns (34a) is equal to an area circulated by the second turns (34b).

9. Rotation-angle sensor (10) according to one of the preceding claims,
wherein turns (34a, 34b) of a coil (20) circulate differently-sized areas; and/or
wherein turns (34a, 34b) of the coils (20) are arranged offset relative to one another.

10. Rotation-angle sensor (10) according to one of the preceding claims,
wherein the coils (20) are arranged in merely an angular range of the stator element (12); or
wherein each of the coils (20) completely encircles the stator element (14).

11. Rotation-angle sensor (10) according to one of the preceding claims,
wherein the rotor element (14) exhibits at least one induction element (24) which is arranged within an angular range of the rotor element; and/or
wherein the induction element (24) covers only one turn (34a, 34b) of a coil (20) in the axial direction.

## Revendications

1. Capteur d'angle de rotation (10), comprenant :
un élément stator (12) pourvu d'au moins trois bobines (20) ;
un élément rotor (14), monté rotatif par rapport à l'élément stator (12), qui est réalisé pour se coupler inductivement avec chacune des au moins trois bobines (20) avec une intensité différente en fonction d'un angle de rotation ;
une unité d'interprétation (22) destinée à déterminer l'angle de rotation entre l'élément rotor (14) et l'élément stator (12) ;
**caractérisé en ce que**
l'unité d'interprétation (22) est conçue pour alimenter cycliquement tour à tour les bobines (20) avec une tension alternative, de sorte qu'une première partie des bobines (20) est respectivement alimentée avec la tension alternative et une partie restante est non alimentée électriquement par l'unité d'interprétation ; et
l'unité d'interprétation est en outre conçue pour identifier cycliquement tour à tour, au niveau d'une ou plusieurs bobines (20) non alimentées électriquement, respectivement une phase et/ou une valeur d'une tension alternative induite et déterminer l'angle de rotation à partir de celle-ci.

2. Capteur d'angle de rotation (10) selon la revendication 1, au moins deux bobines (20) de la première partie des bobines étant alimentées simultanément avec des tensions alternatives différentes.

3. Capteur d'angle de rotation (10) selon la revendication 1 ou 2, les tensions alternatives avec lesquelles sont alimentées les bobines (20) de la première partie des bobines possédant des fréquences différentes, des phases différentes et/ou des valeurs différentes.

4. Capteur d'angle de rotation (10) selon l'une des revendications précédentes, une seule bobine étant alimentée avec une tension alternative et une valeur et/ou une phase d'une tension alternative induite étant respectivement identifiée au niveau des bobines (20) restantes ; ou
la tension alternative induite n'étant identifiée qu'au niveau d'une seule bobine (20) et les bobines restantes étant alimentées avec une tension alternative.

5. Capteur d'angle de rotation (10) selon l'une des revendications précédentes, l'unité d'interprétation (22) étant conçue pour déterminer un écart axial entre l'élément stator (12) et l'élément rotor (14) à partir de la valeur et/ou de la phase de la tension alternative induite.

6. Capteur d'angle de rotation (10) selon l'une des revendications précédentes,
les bobines (20) étant des bobines planes ; et/ou
les bobines (20) étant disposées sur et/ou dans un circuit imprimé (18).

7. Capteur d'angle de rotation (10) selon l'une des revendications précédentes,
les bobines (20) se chevauchant au moins partiellement mutuellement dans une direction axiale ; et/ou
chacune des bobines (20) possédant au moins deux enroulements (34) successifs l'un à l'autre dans la direction périphérique.

8. Capteur d'angle de rotation (10) selon l'une des revendications précédentes,
chacune des bobines (20) possédant au moins un premier enroulement (34a) et au moins un deuxième enroulement (34b), l'au moins un premier enroulement (34a) et l'au moins un deuxième enroulement (34b) étant orientés en sens inverse ; et/ou
les premiers enroulements (34a) et les deuxièmes enroulements (34b) d'une bobine (20) étant disposés en alternance l'un à l'autre dans la direction périphérique de l'élément stator (12) ; et/ou
la surface couverte par les premiers enroulements (34a) étant égale à une surface couverte par les deuxièmes enroulements (34b).

9. Capteur d'angle de rotation (10) selon l'une des revendications précédentes,
les enroulements (34, 34b) d'une bobine (20) couvrant des surfaces de tailles différentes ; et/ou
les enroulements (34, 34b) des bobines (20) étant disposés décalés les uns par rapport aux autres.

10. Capteur d'angle de rotation (10) selon l'une des revendications précédentes,
les bobines (20) étant disposées uniquement dans une plage angulaire de l'élément stator (12) ; ou
chacune des bobines (20) entourant entièrement l'élément stator (14).

11. Capteur d'angle de rotation (10) selon l'une des revendications précédentes,
l'élément rotor (14) possédant au moins un élément d'induction (24) qui est disposé dans une plage angulaire de l'élément rotor ; et/ou
l'élément d'induction (24) recouvrant uniquement un enroulement (34a, 34b) d'une bobine (20) dans la direction axiale.
